# EUROPEAN PATENT SPECIFICATION

(11) **EP 1 276 296 B1**
(45) Date of publication and mention of the grant of the patent: **22.09.2004**
(21) Application number: 02254740.0
(22) Date of filing: 05.07.2002
(51) Int. Cl.: H04L 29/06, H04M 1/725

(54) **Method of enabling operation of a player device using a mobile communication device**
Verfahren zum Betrieb einer Spielvorrichtung unter Verwendung eines Mobilkommunikationsgerätes
Méthode pour permettre l'opération d'un dispositif de jeu employant un dispositif de communication mobile

(30) Priority: 12.07.2001 GB 0117001
(43) Date of publication of application: 15.01.2003
(73) Proprietor: Hewlett-Packard Company, A Delaware Corporation, Palo Alto, CA 94304 (US)
(72) Inventor: Oliver, Huw Edward, Eastville, Bristol BS5 6DR (GB)
(74) Representative: Lawrence, Richard Anthony

(56) References cited:
- EP-A- 1 091 543
- EP-A- 1 139 197
- EP-A- 1 170 922
- US-A- 5 880 732
- US-B1- 6 189 105
- US-B1- 6 223 291
- US-B1- 6 280 327

## Description

### Description of Invention

This invention relates to a method of enabling operation of a player device using a mobile communication device, a communication module to perform the method and a mobile communication device operable to perform the method and/or provided with a communication module, a method of operating a player device, a control module for a player device operable to perform the method and a player device operable to perform the method and/or provided with a control module, and a content provision means.

A great deal of multimedia information is available over the Internet. This information may comprise for example, or give information in the form of music files, Internet radio stations etc., video information, text or graphical information, hereinafter referred to as "playable content". It is known to provide mobile communication devices which are capable of, accessing the Internet, for example wireless access protocol (WAP) enabled mobile phones. It may not always be the case that the mobile communication device is able to play the playable content or may not be able to satisfactorily play the content. Where a computer may be provided with an appropriate peripheral or player software to play playable content, this is less straightforward to achieve for mobile communication devices and the content must be modified accordingly. For example, in the case WAP-enabled mobile phones, due to the necessarily small size of the phones, the type of playable content which may be accessed and played on such a phone is restricted, and in particular Internet sites accessible by WAP-enabled phones have limited text and graphical content.

An aim of the above invention is to reduce or overcome the above problem.

EP-A-1091543 discloses downloading an audio file to a cellular telephone and playing it, potentially by using an accessory which is physically connected to the cellular telephone. This document also discloses the use of a short-range wireless link for loading audio files directly to the accessory from a PC and for sharing audio files between equivalent phones.

US-B1-6223291 discloses a wireless electronic commerce system including a licensing system for authorising the use of playable content on a specific mobile communication device.

According to a first aspect of the invention we provide a method of enabling operation of a player device using a mobile communication device, comprising the steps of
receiving an identifier on the mobile communication device from a provider system,
transmitting the identifier from the mobile communication device to a player device to permit operation of the player device, and transmitting a continual enabling signal from the mobile communication device to the player device to permit the player device to continue operation.

The identifier may be received by the mobile communication device via a first communication means, and the identifier and enabling signal may be transmitted to the player device via a second communication means.

The mobile communication device may receive playable content from the provider system and transmit the content to the player device.

Alternatively, playable content stored on the mobile communication device may be transmitted to the player device.

The method may comprise the step of transmitting a playable content request from the mobile communication device to the provider system.

According to a second aspect of the invention we provide a communication module for a mobile communication device, the module being operable to perform a method according to the first aspect of the invention.

According to a third aspect of the invention we provide a mobile communications device operable to perform a method according to the first aspect of the invention or provided with a communication module according to a second aspect of the invention.

The mobile communication device may comprise a first communication means and a second communication means.

The second communication means may have a shorter range than the first communication means.

The first communication means may comprise a cellular radio telephone link.

The second communication means may comprise an infrared communication means.

Alternatively, the second communication means may comprise a wireless local area connection communication means.

According to a fourth aspect of the present invention, we provide a method of operating a player device comprising the steps of
receiving an identifier from a mobile communications device,
commencing playing playable content in response to receipt of the identifier, and
continuing to play the playable content only on continual receipt of an enabling signal from the mobile communication device.

The method may comprise the step of authenticating the identifier prior to commencing playing the playable content.

The method may comprise the step of ceasing to play the playable content if the enabling signal is not received.

The enabling signal may comprise a periodic repeated signal.

The method may comprise the step of receiving playable content to be played from the provider system.

The method may comprise the step of receiving playable content to be played from the mobile communication device.

According to a fifth aspect of the present invention, we provide a control module for a player device operable to perform a method according to the fourth aspect of the invention.

According to a sixth aspect of the invention, we provide a player device operable to perform a method according to the fourth aspect of the invention and/or provided with a control module according to the fourth aspect of the invention.

The player device may comprise communication means operable to communicate with a mobile communication device wherein the communication means comprises a short range communication means.

The communication means may comprise an infrared communication means.

Alternatively, the communication means may comprise a wireless local area network communication means.

According to a seventh aspect of the present invention, we provide a content provision means comprising a player device according to the sixth aspect of the invention and a provider system, the provider system comprising stored content, the provider system being operable to receive a request for content from a mobile communication device, transmit an identifier to the mobile communication device, and transmit the requested content.

The provider system may be operable to transmit the requested content to the player device.

Alternatively, the content provider system may be operable to transmit the requested content to the mobile communication device.

Hence, a suitable mobile communication device will be able to use a local content player device, for example a video screen to display contents downloaded from a content provider and be billed accordingly.

The invention will now be described by way of example only with reference to the accompanying drawing, wherein:

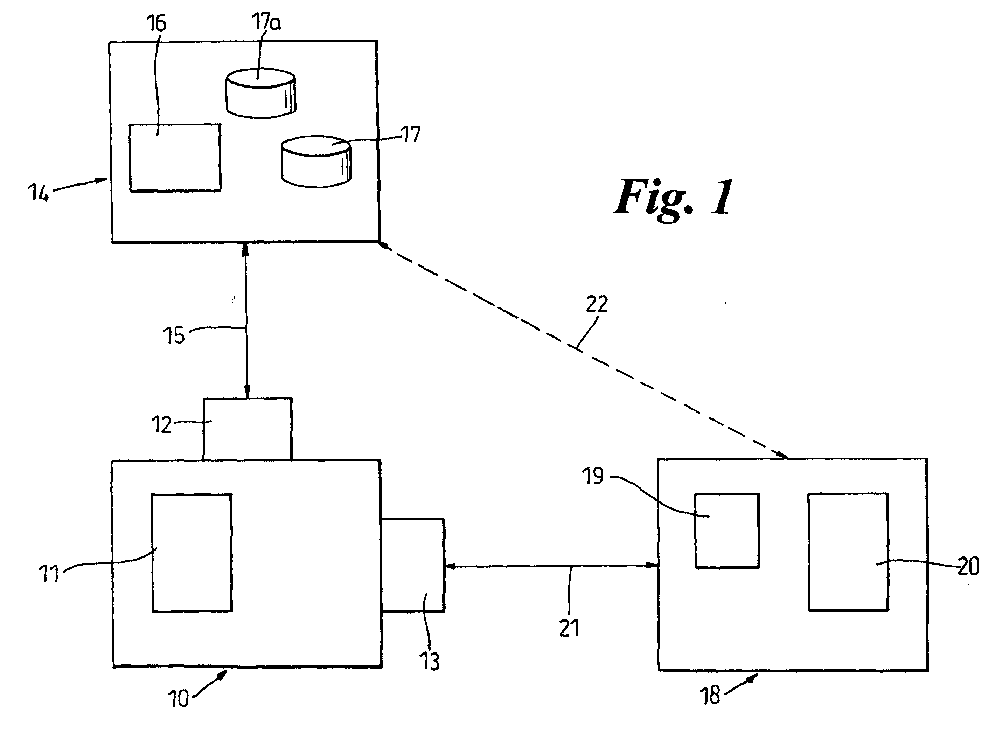

Figure 1 is a diagrammatic illustration of a content provision means according to the present invention.

Referring now to the Figure, a mobile communication device 10 according to the third aspect of the present invention is shown, provided with a communication module 11 according to the second aspect of the present invention, a first communication means 12 and a second communication means 13.

A provider system is generally indicated at 14, linked with the mobile communication device 10 via a communication link generally indicated by the arrows 15 via the first communication means 12. In this example, the provider system 14 is provided with an identifier generator 16 and a content storage means 17.

A player device according to the sixth aspect of the present invention is shown at 18, provided with a control module 19 according to the fifth aspect of the present invention. The player device is provided with output means 20 operable to display or otherwise present requested content to a user. The player device 18 is connected to the mobile communication device 10 by a communication link generally indicated by arrows 21 via the second communication means 13.

Optionally, the player device 18 and provider system 14 may be connected by a communication link which does not pass through the mobile communication device 10, indicated by dashed arrows 22.

When a user of the mobile communication device 10 wishes to consume playable content from the provider system 14 using the player device 18, the following steps are performed in accordance with a method according to the first aspect of the invention. The mobile communication device 10 contacts the provider system 14 via the first communication means 12 and communication link 15. In this example, it is envisaged that the first communication means 12 comprises a cellular radio telephone connection which enables an Internet link to be established between the mobile communication device 10 and the provider system 14. The desired playable content held on the content storage means 17 may be selected by the user, for example from a list transmitted from the provider system 14 to the mobile communication device 10 and displayed to the user. The identifier generator 16 provides an identification number which is transmitted from the provider system to the mobile communication device 10.

To enable the selected playable content to be played on the device player 18, the identifier is then tranmitted via the second communication means 13 and communication link 21 to the player device 18, to permit the device 18 to begin playing the selected playable content in accordance with a method according to the fourth aspect of the present invention. In this example, the playable content is supplied from the content storage means 17 to the mobile communication device 10 and then to the player device 18 and comprises streamed multimedia content, but it might be envisaged that the content could be transmitted from the provider system 14 to the player device 18 by a suitable connection 22, for example a broad-band communication link with a higher capacity than the first commmunication link 15 and the second communication link 21. To establish this connection, the player device 18 may open communication with the provider system 14, passing back the identifier originally provided by the provider system 14 to obtain the selected content. Alternatively, the content might be stored on the mobile communication device and passed to the player device 18, or the player device 18 may be provided with a content storage means which is playable on receipt of any suitable identifier from the provider system 14 (in this case either synchronisation of some kind between the content lists of the of the provider system 14 and the player device 18 is desirable, or the identifier provided by the provider system 14 will be such as to allow the specific choice of content to be selected by the user of the mobile communication device 10 from the alternatives offered by the player device 18).

To enable the player device 18 to continue playing the desired content, a continual enabling signal is generated by the communication module 11 of the mobile communication device 10 and transmitted to the player device 18. In this example, the enabling signal comprises a "heart beat" protocol, comprising regular and frequent request/response exchanges, in which the player device 18 tranmits a simple request signal and the mobile communication device transmits a simple response. While this enabling signal is maintained, the player device 18 will continue to play the content, making it available to the user on the output means 20. If the enabling signal is not received, for example if the second communication link 21 is broken, then the player device 18 will cease to play the playable content. In this example, 'continual' is taken to mean 'regularly repeated', but it will be apparent that the enabling signal could comprise a 'continuous', i.e. uninterrupted, signal from the mobile communication device 10.

In the preferred example, once the enabling signal is not received and the player device 18 ceases to play the playable content, the identifier will be invalidated (for example, no longer recognised by the player device), and for the player device 18 to operate again, a new identifier will have to be requested from the provider system 14. Alternatively, it may be envisaged that for certain applications, the identifier will remain valid and the player device 18 would resume playing the content once the second communication link 21 and enabling signal were re-established. In this or other arrangements, it may be desirable for the player device 18 to have the ability to check the validity of identifiers directly with the provider system 14 independently of the mobile communication device 10.

In the present example, the provider system 14 also comprises a billing information storage means 17a. When the link between the mobile communication device 10 and provider system 14 is established, the mobile communication device 10 may transmit a suitable device identifier, for example a mobile phone's SIM card number. The provider system 14 will process information to enable the user to be billed for the playable content and use of the player device 18. For example, the provider system 14 may log the identifier, the type of content requested and the time at which streaming of the playable content started. When the second communication link 21 and/or enabling signal is interupted and the player device 18 ceases to play the content, the time at which the second communication link 21 was broken may be transmitted by the mobile communication device 10 and/or player device 18 to the provider system 14 to be logged to provide an appropriate time charge.

In the present example, the second communication means 13 preferably comprises a short-range link, such as an infrared communication link, or a wireless local area network link (e.g. using a known short range wireless protocol such as Bluetooth), or any other appropriate link as desired.

By using the present invention, a user will be able to use a local player device, for example a video display, to play the requested downloaded playable content, for example a video, whilst the user and his mobile communication device 10 remain in the vicinity of the player device 18. The user then be billed for the downloaded content and/or the use of the player device 18. It would be envisaged that the player device 18 may be a publically available device, for example a video screen and player at an airport terminal.

Although as discussed above it is preferred that once the second communication link 21 is broken, the identifier transmitted by the provider system 14 ceases to be valid, it might be envisaged that as a user and mobile communication device 10 pass a plurality of different player devices 18, the identifier remains valid and a second communication link 21 and enabling signal is established between each successive player device 18 and the mobile communication device 10. Thus, as for example a user walks through an airport terminal provided with a plurality of display devices 18, the requested content may be displayed on successive display devices 18 as the mobile communication device 10 comes into range of each display device 18.

In the present specification "comprise" means "includes or consists of and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A method of enabling operation of a player device (18) using a mobile communication device (10), comprising the steps of
supplying playable content to the player device (18) from a provider system (14),
**characterised in that** the method comprises the further steps of
receiving an identifier on the mobile communication device (10) from the provider system (14) via a first communication link (15),
connecting the player device (18) and mobile communication device (10) with a second communication link (21) comprising a short-range wireless link,
transmitting the identifier from the mobile communication device (10) to a player device (18) to permit operation of the player device (18), and
transmitting a continual enabling signal from the mobile communication device (10) to the player device (18) via the second communication link (21) to permit the player device (18) to continue operation.

2. A method according to claim 1 comprising the step of receiving the playable content from the provider system (14) and transmitting the playable content to the player device (18).

3. A method according to claim 1 comprising the step of transmitting playable content stored on the mobile communication device (10) to the player device (18).

4. A method according to claim 1 comprising the step of transmitting playable content from the provider system (14) to the player device (18).

5. A method according to any one of the preceding claims comprising the initial step of transmitting a request for playable content from the mobile communication device (10) to the provider system (14).

6. A mobile communications device (10) operable to enable operation of a player device (18), the mobile communications device being operable to;
select desired playable content from a provider system (14) to be played on the player device (18),
**characterised in that** the mobile communications device is further operable to;
receive an identifier from the provider system (14) via a first communication link (15),
connect to the player device (18) with a second communication link (21) comprising a short-range wireless link,
transmit the identifier to player device (18) to permit operation of the player device (18), and
transmit a continual enabling signal from the mobile communication device (10) to the player device (18) via the second communication link (21) to permit the player device (18) to continue operation.

7. A mobile communication device (10) according to claim 6 comprising a first communication means to provide the first communication link (15) and a second communication means. to provide the second communication link (21)

8. A mobile communication device (10) according to claim 7 wherein the second communication means has a shorter range than the first communication means.

9. A mobile communication device (10) according to claim 7 or claim 8 wherein the first communication means comprises a cellular radio telephone link.

10. A mobile communication device (10) according to any one of claims 7 to 9 wherein the second communication means is an infrared communication means.

11. A mobile communication device (10) according to any one of claims 7 to 9 wherein the second communication means is a wireless local area network communication means.

12. A mobile communication device (10) according to any one of claims 6 to 11 operable to receive playable content from the provider system (14) and transmit the playable content to the player device (18).

13. A mobile communication device (10) according to any one of claims 6 to 11 operable to transmit playable content stored on the mobile communication device (10) to the player device (18).

14. A method of operating a player device (18) comprising the steps of:
receiving playable content to be played,
**characterised in that** the method comprises the further steps of
receiving an identifier from a mobile communication device (10),
commencing playing the playable content in response to receipt of the identifier, and
continuing to play the playable content only on continual receipt of an enabling signal from the mobile communication device (10) via a communication link comprising a short-range wireless link.

15. A method according to claim 14 comprising the step of authenticating the identifier prior to commencing playing the playable content.

16. A method according to claim 14 or claim 15 comprising the step of ceasing to play the content if an enabling signal is not received.

17. A method according to claim 16 wherein the enabling signal comprises a periodic repeated signal.

18. A method according to any one of claims 14 to 17 comprising the steps of receiving the playable content to be played from a provider system (14).

19. A method according to any one of claims 14 to 18 comprising the step of receiving playable content to be played from the mobile communication device (10).

20. A player device (18) operable to
receiving playable content to be played,
and play the received playable content,
**characterised in that** the player device (18) is operable to
receive an identifier from a mobile communication device (10),
commence playing the playable content in response to receipt of the identifier, and
continue to play the playable content only on continual receipt of an enabling signal from the mobile communication device (10) via a communication means comprising a short-range wireless communication link.

21. A player device (18) according to claim 20 wherein the communication means comprises an infrared communication means.

22. A player device (18) according to claim 20 wherein the communication means comprises a wireless local area network communication means.

23. A player device (18) according to any one of claims 20 to 22 operable to authenticate the identifier prior to commencing playing the playable content.

24. A player device (18) according to any one of claims 20 to 23 operable to cease playing the playable content if an enabling signal is not received.

25. A player device (18) according to any one of claims 20 to 24 operable to receive the playable content to be played from a provider system (14).

26. A player device (18) according to any one of claims 20 to 25 operable to receive the playable content to be played from the mobile communication device (10).

27. A content provision system comprising a player device (18) according to any one of claims 20 to 26 and a provider system (14), the provider system (14) comprising stored content, the provider system being operable to receive a request for content from a mobile communication device (10), transmit an identifier to the mobile communication device (10), and transmit the requested content.

28. A content provision system according to claim 27 wherein the provider system (14) is operable to transmit the requested content to the player device (18).

29. A content provision system according to claim 28 wherein the content provider system (14) is operable to transmit the requested content to the mobile communication device (10).

## Patentansprüche

1. Ein Verfahren zum Ermöglichen eines Betriebs einer Abspielervorrichtung (18) unter Verwendung einer mobilen Kommunikationsvorrichtung (10), mit folgenden Schritten:
Liefern eines abspielbaren Inhalts von einem Bereitstellersystem (14) an die Abspielervorrichtung (18),
**dadurch gekennzeichnet, daß** das Verfahren ferner die folgenden Schritte aufweist:
Empfangen eines Identifizierers an der mobilen Kommunikationsvorrichtung (10) von dem Bereitstellersystem (14) über eine erste Kommunikationsverbindung (15),
Verbinden der Abspielervorrichtung (18) und der mobilen Kommunikationsvorrichtung (10) mit einer zweiten Kommunikationsverbindung (21), die eine drahtlose Nahbereichsverbindung aufweist,
Übertragen des Identifizierers von der mobilen Kommunikationsvorrichtung (10) an eine Abspielervorrichtung (18), um einen Betrieb der Abspielervorrichtung (18) zu erlauben, und
Übertragen eines fortwährenden Freigabesignals von der mobilen Kommunikationsvorrichtung (10) an die Abspielervorrichtung (18) über die zweite Kommunikationsverbindung (21), um einen fortwährenden Betrieb der Abspielervorrichtung (18) zu erlauben.

2. Ein Verfahren gemäß Anspruch 1, das den Schritt eines Empfangens des abspielbaren Inhaltes von dem Bereitstellersystem (14) und eines Übertragens des abspielbaren Inhalts an die Abspielervorrichtung (18) aufweist.

3. Ein Verfahren gemäß Anspruch 1, das den Schritt eines Übertragens eines abspielbaren Inhalts, der auf der mobilen Kommunikationsvorrichtung (10) gespeichert ist, an die Abspielervorrichtung (18) aufweist.

4. Ein Verfahren gemäß Anspruch 1, das den Schritt eines Übertragens eines abspielbaren Inhalts von dem Bereitstellersystem (14) an die Abspielervorrichtung (18) aufweist.

5. Ein Verfahren gemäß einem der vorherigen Ansprüche, das den anfänglichen Schritt eines Übertragens einer Anforderung nach einem abspielbaren Inhalt von der mobilen Kommunikationsvorrichtung (10) an das Bereitstellersystem (14) aufweist.

6. Eine mobile Kommunikationsvorrichtung (10), die wirksam ist, um einen Betrieb einer Abspielervorrichtung (18) zu ermöglichen, wobei die mobile Kommunikationsvorrichtung wirksam ist, um:
einen erwünschten abspielbaren Inhalt, der auf der Abspielervorrichtung (18) abgespielt werden soll, aus einem Bereitstellersystem (14)auszuwählen,
**dadurch gekennzeichnet, daß** die mobile Kommunikationsvorrichtung ferner wirksam ist, um:
einen Identifizierer von dem Bereitstellersystem (14) über eine erste Kommunikationsverbindung (15) zu empfangen,
die Abspielervorrichtung (18) über eine zweite Kommunikationsverbindung (21), die eine drahtlose Nahbereichsverbindung aufweist, zu verbinden,
den Identifizierer an die Abspielervorrichtung (18) zu übertragen, um einen Betrieb der Abspielervorrichtung (18) zu erlauben, und
ein fortwährendes Freigabesignal von der mobilen Kommunikationsvorrichtung (10) an die Abspielervorrichtung (18) über die zweite Kommunikationsverbindung (21) zu übertragen, um einen fortwährenden Betrieb der Abspielervorrichtung (18) zu erlauben.

7. Eine mobile Kommunikationsvorrichtung (10) gemäß Anspruch 6, die eine erste Kommunikationseinrichtung, um die erste Kommunikationsverbindung (15) bereitzustellen, und eine zweite Kommunikationseinrichtung aufweist, um die zweite Kommunikationsverbindung (21) bereitzustellen.

8. Eine mobile Kommunikationsvorrichtung (10) gemäß Anspruch 7, bei der die zweite Kommunikationseinrichtung einen kürzeren Bereich als die erste Kommunikationseinrichtung aufweist.

9. Eine mobile Kommunikationsvorrichtung (10) gemäß Anspruch 7 oder Anspruch 8, bei der die erste Kommunikationseinrichtung eine Mobilfunk-Telefonverbindung aufweist.

10. Eine mobile Kommunikationsvorrichtung (10) gemäß einem der Ansprüche 7 bis 9, bei der die zweite Kommunikationseinrichtung eine Infrarot-Kommunikationseinrichtung ist.

11. Eine mobile Kommunikationsvorrichtung (10) gemäß einem der Ansprüche 7 bis 9, bei der die zweite Kommunikationseinrichtung eine drahtlose Lokalnetz-Kommunikationseinrichtung ist.

12. Eine mobile Kommunikationsvorrichtung (10) gemäß einem der Ansprüche 6 bis 11, die wirksam ist, um einen abspielbaren Inhalt von dem Bereitstellersystem (14) zu empfangen und den abspielbaren Inhalt an die Abspielervorrichtung (18) zu übertragen.

13. Eine mobile Kommunikationsvorrichtung (10) gemäß einem der Ansprüche 6 bis 11, die wirksam ist, um einen abspielbaren Inhalt, der auf der mobilen Kommunikationsvorrichtung (10) gespeichert ist, an die Abspielervorrichtung (18) zu übertragen.

14. Ein Verfahren zum Betreiben einer Abspielervorrichtung (18), mit folgenden Schritten:
Empfangen eines abspielbaren Inhalts, der abgespielt werden soll,
**dadurch gekennzeichnet, daß** das Verfahren ferner die folgenden Schritte aufweist:
Empfangen eines Identifizierers von einer mobilen Kommunikationsvorrichtung (10),
Beginnen eines Abspielens des abspielbaren Inhalts ansprechend auf einen Empfang des Identifizierers, und
fortwährendes Abspielen des abspielbaren Inhalts nur bei einem fortwährenden Empfang eines Freigabesignals von der mobilen Kommunikationsvorrichtung (10) über eine Kommunikationsverbindung, die eine drahtlose Nahbereichsverbindung aufweist.

15. Ein Verfahren gemäß Anspruch 14, das den Schritt eines Authentifizierens des Identifizierers vor einem Beginnen des Abspielens des abspielbaren Inhalts aufweist.

16. Ein Verfahren gemäß Anspruch 14 oder Anspruch 15, das den Schritt eines Stoppens eines Abspielens des Inhalts, wenn kein Freigabesignal empfangen wird, aufweist.

17. Ein Verfahren gemäß Anspruch 16, bei dem das Freigabesignal ein periodisches wiederholtes Signal aufweist.

18. Ein Verfahren gemäß einem der Ansprüche 14 bis 17, das den Schritt eines Empfangens des abspielbaren Inhaltes, der abgespielt werden soll, von einem Bereitstellersystem (14) aufweist.

19. Ein Verfahren gemäß einem der Ansprüche 14 bis 18, das den Schritt eines Empfangens eines abspielbaren Inhaltes, der abgespielt werden soll, von der mobilen Kommunikationsvorrichtung (10) aufweist.

20. Eine Abspielervorrichtung (18), die wirksam ist, um:
einen abspielbaren Inhalt, der abgespielt werden soll, zu empfangen,
und den empfangenen abspielbaren Inhalt abzuspielen,
**dadurch gekennzeichnet, daß** die Abspielervorrichtung (18) wirksam ist, um:
einen Identifizierer von einer mobilen Kommunikationsvorrichtung (10) zu empfangen,
ein Abspielen des abspielbaren Inhalts ansprechend auf einen Empfang des Identifizierers zu beginnen, und
ein Abspielen des abspielbaren Inhaltes nur bei einem fortwährenden Empfang eines Freigabesignals von der mobilen Kommunikationsvorrichtung (10) über eine Kommunikationseinrichtung, die eine drahtlose Nahbereichskommunikationsverbindung aufweist, fortzusetzen.

21. Eine Abspielervorrichtung (18) gemäß Anspruch 20, bei der die Kommunikationseinrichtung eine Infrarot-Kommunikationseinrichtung aufweist.

22. Eine Abspielervorrichtung (18) gemäß Anspruch 20, bei der die Kommunikationseinrichtung eine drahtlose Lokalnetz-Kommunikationseinrichtung aufweist.

23. Eine Abspielervorrichtung (18) gemäß einem der Ansprüche 20 bis 22, die wirksam ist, um den Identifizierer vor einem Beginnen eines Abspielens des abspielbaren Inhalts zu authentifizieren.

24. Eine Abspielervorrichtung (18) gemäß einem der Ansprüche 20 bis 23, die wirksam ist, um ein Abspielen des abspielbaren Inhalts zu stoppen, wenn kein Freigabesignal empfangen wird.

25. Eine Abspielervorrichtung (18) gemäß einem der Ansprüche 20 bis 24, die wirksam ist, um den abspielbaren Inhalt, der abgespielt werden soll, von einem Bereitstellersystem (14) zu empfangen.

26. Eine Abspielervorrichtung (18) gemäß einem der Ansprüche 20 bis 25, die wirksam ist, um den abspielbaren Inhalt, der abgespielt werden soll, von der mobilen Kommunikationsvorrichtung (10) zu empfangen.

27. Ein Inhaltsbereitstellungssystem, das eine Abspielervorrichtung (18) gemäß einem der Ansprüche 20 bis 26 und ein Bereitstellersystem (14) aufweist, wobei das Bereitstellersystem (14) einen gespeicherten Inhalt aufweist, wobei das Bereitstellersystem wirksam ist, um eine Anforderung nach einem Inhalt von einer mobilen Kommunikationsvorrichtung (10) zu empfangen, einen Identifizierer an die mobile Kommunikationsvorrichtung (10) zu übertragen und den angeforderten Inhalt zu übertragen.

28. Ein Inhaltsbereitstellungssystem gemäß Anspruch 27, bei dem das Bereitstellersystem (14) wirksam ist, um den angeforderten Inhalt an die Abspielervorrichtung (18) zu übertragen.

29. Ein Inhaltsbereitstellungssystem gemäß Anspruch 28, bei dem das Inhaltsbereitstellersystem (14) wirksam ist, um den angeforderten Inhalt an die mobile Kommunikationsvorrichtung (10) zu übertragen.

## Revendications

1. Un procédé de validation du fonctionnement d'un dispositif de jeu (18) qui utilise un dispositif de communication mobile (10), qui comprend les étapes consistant à :
■ fournir au dispositif de jeu (18) un contenu jouable à partir d'un système fournisseur (14),
■ **caractérisé en ce que** le procédé comprend les étapes additionnelles consistant à:
■ recevoir du système fournisseur (14) un identifiant sur le dispositif de communication mobile (10) par l'intermédiaire d'une première liaison de communication (15),
■ connecter le dispositif de jeu (18) et le dispositif de communication (10) au moyen d'une deuxième liaison de communication (21) qui comprend une liaison sans fil à courte portée,
■ transmettre au dispositif de jeu (18) l'identifiant provenant du dispositif de communication mobile (10) pour permettre le fonctionnement du dispositif de jeu (18), et
■ transmettre du dispositif mobile de communication (10) au dispositif de jeu (18) un signal continu de validation par l'intermédiaire de la deuxième liaison de communication (21) pour permettre au dispositif de jeu (18) de continuer à fonctionner.

2. Un procédé selon la revendication 1, qui comprend l'étape consistant à recevoir du système fournisseur (14) le contenu jouable et transmettre le contenu jouable au dispositif de jeu (18).

3. Un procédé selon la revendication 1 qui comprend l'étape consistant à transmettre au dispositif de jeu (18) un contenu jouable enregistré sur le dispositif de communication mobile (10).

4. Un procédé selon la revendication 1 qui comprend l'étape consistant à transmettre au dispositif de jeu (18) un contenu jouable provenant du système fournisseur (14).

5. Un procédé selon l'une quelconque des revendications précédentes qui comprend l'étape initiale consistant à transmettre du dispositif de communication (10) au système fournisseur (14) une demande de contenu jouable.

6. Un dispositif de communication mobile (10) qui peut être mis en oeuvre pour permettre le fonctionnement d'un dispositif de jeu (18), le dispositif de communication mobile pouvant être mis en oeuvre de manière à :
■ sélectionner un contenu jouable provenant du système fournisseur (14) à jouer sur le dispositif de jeu (18),
**caractérisé en ce que** le dispositif de communication mobile peut en outre être mis en oeuvre pour:
■ recevoir du système fournisseur (14) un identifiant par l'intermédiaire d'une première liaison de communication (15),
■ se connecter au dispositif de jeu (18) au moyen d'une deuxième liaison de communication (21) qui comprend une liaison sans fil à courte portée;
■ transmettre l'identifiant au dispositif de jeu (18) pour permettre le fonctionnement du dispositif de jeu (18), et
■ transmettre du dispositif de communication mobile (10) au dispositif de jeu (18) un signal continu de validation par l'intermédiaire de la deuxième liaison de communication (21) pour permettre au dispositif de jeu (18) de continuer à fonctionner.

7. Un dispositif de communication mobile (10) selon la revendication 6 qui comprend un premier moyen de communication pour établir la première liaison de communication (15) et un deuxième moyen de communication pour établir la deuxième liaison de communication (21).

8. Un dispositif de communication mobile (10) selon la revendication 7 dans lequel la portée du deuxième moyen de communication est plus courte que celle du premier moyen de communication.

9. Un dispositif de communication mobile (10) selon la revendication 7 ou la revendication 8 dans lequel le premier moyen de communication comprend une liaison par radiotéléphone cellulaire.

10. Un dispositif de communication mobile (10) selon l'une quelconque des revendications 7 à 9 dans lequel le deuxième moyen de communication est un moyen de communication par infrarouges.

11. Un dispositif de communication mobile (10) selon une quelconque des revendications 7 à 9 dans lequel le deuxième moyen de communication est un moyen de communication par réseau local sans fil.

12. Un dispositif de communication mobile (10) selon l'une quelconque des revendications 6 à 11 qui peut être mis en oeuvre pour recevoir du système fournisseur (14) un contenu jouable et transmettre le contenu jouable au dispositif de jeu (18).

13. Un dispositif de communication mobile (10) selon l'une quelconque des revendications 6 à 11 qui peut être mis en oeuvre pour transmettre au dispositif de jeu (18) un contenu jouable enregistré sur le dispositif de communication mobile (10).

14. Un procédé de mise en oeuvre d'un dispositif de jeu (18) qui comprend les étapes consistant à :
■ recevoir un contenu jouable à jouer,
**caractérisé en ce que** le procédé comprend les étapes additionnelles consistant à:
■ recevoir un identifiant provenant d'un dispositif de communication mobile (10),
■ commencer à jouer le contenu jouable en réponse à la réception de l'identifiant, et
■ ne continuer à jouer le contenu jouable que si un signal de validation est reçu en continu du dispositif de communication mobile (10) par l'intermédiaire d'une liaison de communication qui comprend une liaison sans fil de courte portée.

15. Un procédé selon la revendication 14 qui comprend l'étape consistant à authentifier l'identifiant avant de commencer à jouer le contenu jouable.

16. Un procédé selon la revendication 14 ou la revendication 15 qui comprend l'étape consistant à cesser de jouer le contenu si un signal de validation n'est pas reçu.

17. Un procédé selon la revendication 16 dans lequel le signal de validation comprend un signal répété périodique.

18. Un procédé selon l'une quelconque des revendications 14 à 17 qui comprend l'étape consistant à recevoir d'un système fournisseur (14) le contenu jouable à jouer.

19. Un procédé selon l'une quelconque des revendications 14 à 18 qui comprend l'étape consistant à recevoir du dispositif de communication mobile (10) le contenu jouable à jouer.

20. Un dispositif de jeu (18) qui peut être mis en oeuvre pour :
■ recevoir un contenu jouable à jouer,
■ et jouer le contenu jouable reçu,
■ **caractérisé en ce que** le dispositif de jeu (18) peut être mis en oeuvre pour:
■ recevoir un identifiant provenant du dispositif de communication mobile (10),
■ commencer à jouer le contenu jouable en réponse à la réception de l'identifiant, et
■ ne continuer à jouer le contenu jouable que si un signal de validation est reçu en continu du dispositif de communication mobile (10) par l'intermédiaire d'une liaison de communication qui comprend une liaison sans fil de courte portée.

21. Un dispositif de jeu (18) selon la revendication 20 dans lequel le moyen de communication comprend un moyen de communication par infrarouges.

22. Un dispositif de jeu (18) selon la revendication 20 dans lequel le moyen de communication comprend un moyen de communication par réseau local sans fil.

23. Un dispositif de jeu (18) selon l'une quelconque des revendications 20 à 22 qui peut être mis en oeuvre pour authentifier l'identifiant avant de commencer à jouer le contenu jouable.

24. Un dispositif de jeu (18) selon l'une quelconque des revendications 20 à 23 qui peut être mis en oeuvre pour cesser de jouer le contenu si un signal de validation n'est pas reçu.

25. Un dispositif de jeu (18) selon l'une quelconque des revendications 20 à 24 qui peut être mis en oeuvre pour recevoir d'un système fournisseur (14) le contenu jouable à jouer.

26. Un dispositif de jeu (18) selon l'une quelconque des revendications 20 à 25 qui peut être mis en oeuvre pour recevoir du dispositif de communication mobile (10) le contenu jouable à jouer.

27. Un système de fourniture de contenu qui comprend un dispositif de jeu (18) selon l'une quelconque des revendications 20 à 26 et un système fournisseur (14), le système fournisseur (14) comprenant un contenu enregistré, le système fournisseur pouvant être mis en oeuvre pour recevoir d'un dispositif de communication mobile une demande de contenu, transmettre un identifiant au dispositif de communication mobile (10), et transmettre le contenu demandé.

28. Un système de fourniture de contenu selon la revendication 27 dans lequel le système fournisseur (14) peut être mis en oeuvre pour transmettre le contenu demandé au dispositif de jeu (18).

29. Un système de fourniture de contenu selon la revendication 28 dans lequel le système fournisseur (14) de contenu peut être mis en oeuvre pour transmettre le contenu demandé au dispositif de communication mobile (10).
